(19) Europäisches Patentamt
European Patent Office
Office européen des brevets

(11) Veröffentlichungsnummer : **0 453 489 B1**

# (12) EUROPÄISCHE PATENTSCHRIFT

(45) Veröffentlichungstag der Patentschrift :
**02.06.93 Patentblatt 93/22**

(51) Int. Cl.$^5$ : **D21C 5/02**

(21) Anmeldenummer : **90902194.1**

(22) Anmeldetag : **05.01.90**

(86) Internationale Anmeldenummer :
**PCT/EP90/00024**

(87) Internationale Veröffentlichungsnummer :
**WO 90/08220 26.07.90 Gazette 90/17**

## (54) VERFAHREN ZUR FLOTATION VON FÜLLSTOFFEN AUS ALTPAPIEREN IN GEGENWART ORGANISCHER PHOSPHORSÄUREESTER.

(30) Priorität : **14.01.89 DE 3900941**

(43) Veröffentlichungstag der Anmeldung :
**30.10.91 Patentblatt 91/44**

(45) Bekanntmachung des Hinweises auf die Patenterteilung :
**02.06.93 Patentblatt 93/22**

(84) Benannte Vertragsstaaten :
**AT BE CH DE ES FR GB IT LI NL SE**

(56) Entgegenhaltungen :
**EP-A- 0 030 057**
**US-A- 3 986 922**
**TAPPI JOURNAL, vol.69, Nr.3, March 1986, ATLANTA,US, p. 102 - 106; ;T.H.QUICK et al.: "Xerography deinking - a fundamental approach"**

(73) Patentinhaber : **Henkel Kommanditgesellschaft auf Aktien**
**Henkelstrasse 67**
**W-4000 Düsseldorf 13 (DE)**

(72) Erfinder : **HORNFECK, Klaus**
**August-Burberg-Strasse 34**
**W-4020 Mettmann (DE)**
Erfinder : **HÖFER, Rainer**
**Klever Strasse 31**
**W-4000 Düsseldorf 30 (DE)**
Erfinder : **VON RYBINSKI, Wolfang**
**Leinenweberweg 12**
**W-4000 Düsseldorf 13 (DE)**

EP 0 453 489 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entfernung von Füllstoffen aus Altpapieren sowie die Verwendung bestimmter organischer Phosphorsäureester zur Entfernung von Füllstoffen aus Altpapieren.

Fast alle Papiere werden mit Füllstoffen versetzt, um ihre Bedruckbarkeit, Dichtigkeit und opazität zu verbessern sowie eine gleichmäßigere Durchsicht und einen größeren Weißgrad zu erhalten. Die zum Einsatz gelangenden Füllstoffe sind mineralischer Natur oder chemisch gefällte Produkte, beispielsweise Aluminiumsilikate, wie Kaoline oder kieselsaure Tonerde, Calciumcarbonate, wie Kreide oder Kalk, Talkum, Calciumsulfat und/oder Bariumsulfat (Ullmanns Encyklopädie der technischen Chemie 17, 577 ff. (1979)). Der Füllstoffanteil in der Papiermasse hängt vom Verwendungszweck des Papiers ab und liegt in den meisten Fällen zwischen 7 und 25 Gew.-%. Um ein Papier mit standardisierten Qualitätsmerkmalen herstellen zu können, ist es unerläßlich, daß die zur Papierherstellung notwendigen Roh- und Hilfsstoffe eine gleichbleibende Qualität aufweisen.

Bedruckte Altpapiere werden in großen Mengen bei der Erzeugung von Druck- und Tissuepapieren eingesetzt. Zur Erzielung einer hohen Papierweiße müssen die Druckfarben aus bedruckten Altpapieren entfernt werden. Dies geschieht mittels Deinking-Verfahren, die im wesentlichen in 2 Teilschritten ablaufen:

1. Aufschlagen der Altpapiere, d.h. Zerfasern in Wasser bei gleichzeitigem Einwirken der für die Ablösung der Druckfarbenteilchen benötigten Chemikalien und
2. Ausscheidung der abgelösten Druckfarbenteilchen aus der Faserstoffsuspension.

Der zweite Verfahrensschritt kann durch Auswaschen oder Flotation erfolgen (Ullman Encyklopädie der technischen Chemie, 4. Auflage, Band 17, Seiten 570 - 571 (1979)) oder zweistukig durch eine Kombination der beiden oder durch zwei hintereinander geschalteten Flotationsstufen erfolgen (TAPPI Journal, Band 69, No.3, März 1986, Seiten 102-106). Bei der Flotation, bei der die unterschiedliche Benetzbarkeit von Druckfarben und Papierfasern ausgenutzt wird, wird Luft durch die Faserstoffsuspensionen gedrückt oder gesaugt. Dabei verbinden sich kleine Luftbläschen mit den Druckfarbenteilchen und bilden an der Wasseroberfläche einen Schaum der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen und Abtrennen der Druckfarben bewirken, werden in vielen Fällen Seifen und/oder Fettalkoholpolyglykolether eingesetzt (Ullmanns Encyklopädie der technischen Chemie, 4. Auflage, Band 17, Seiten 571 - 572 (1979)). Aus JP-A-61/207686, referiert in chem. Abstr. 106, 121694 v wird die Verwendung aliphatischer α-Sulfo-carbonsäuren und aliphatischer α-Sulfo-carbonsäureester in Flotation-Deinking-Verfahren beschrieben. In den russischen Schutzrechten SU-A-773 174, referiert in Derwent 51102 D/28, sowie SU-A-717 195, referiert in Derwent 72992 C/41, wird beschrieben, daß gute Ergebnisse bei der Druckfarbenflotation erzielt werden, wenn Altpapiere mit alkylsulfonat- und seifenhaltigen Mischungen behandelt werden. Gemäß US-A-1 925 372 lassen sich besonders gute Deinking-Ergebnisse erzielen, wenn füllstoffhaltige Altpapiere mit wäßrigen Lösungen, enthaltend Seifen und/oder sulfonierte Mineralöle, behandelt werden und anschließend die Papierfasern durch Filtration abgetrennt werden. Im Falle füllstofffreier bedruckter Altpapiere werden Füllstoffe separat zugesetzt.

US-A-3 986 922 betrifft ein Verfahren zum Deinken von bedruckten Altpapieren unter Verwendung bestimmeter Phosphorsäureester.

Die bekannten Verfahren zur Ausscheidung der abgelösten Druckfarbenteilchen aus den Faserstoffsuspensionen weisen jedoch gravierende Nachteile auf: Durch Flotation wird der hohe Füllstoffanteil in Altpapieren nur sehr unvollständig entfernt, so daß der Anteil an deinktem Altpapier bei der Papierherstellung, insbesondere bei der Herstellung von Zeitungsdruckpapieren, auf etwa 50 Gew.-% begrenzt wird. Durch Wäsche der Papierfasern werden die in Altpapieren enthaltenen Füllstoffe entfernt, jedoch mit dem Nachteil eines sehr hohen Faserverlustes und einer sehr starken Wasserbelastung.

Aus "Wochenblatt für Papierfabrikation" 17, 646 - 649 (1985) ist bekannt, daß der Füllstoffaustrag durch Flotation gesteigert werden kann, wenn Altpapiere nicht mit wäßrigen Flotten, die Seifen oder nichtionische Tenside enthalten, behandelt werden, sondern mit wäßrigen Flotten, die als Tenside insbesondere Alkylbenzolsulfonate, quatäre Ammoniumverbindungen oder ampholytische Tenside enthalten. Diese Verbesserung des Füllstoffaustrages reicht jedoch in vielen Fällen nicht aus, die hohen Anforderungen, die an die Qualität wiedereinsetzbarer Altpapiere gestellt werden, zu erfüllen.

Die Aufgabe der Erfindung bestand daher in der Entwicklung eines Verfahrens, mit dem eine deutliche Steigerung des Füllstoffaustrages aus Altpapieren erzielt werden kann.

Die Erfindung geht von der überraschenden Feststellung aus, daß der Füllstoffaustrag aus wäßrigen Papierstoffsuspensionen in Gegenwart bestimmter organischer Phosphorsäureester deutlich erhöht wird.

Gegenstand der Erfindung ist dementsprechend ein Verfahren zur Entfernung von Füllstoffen aus Altpapieren durch Zugabe von Chemikalien und anschließende Flotation, welches dadurch gekennzeichnet ist, daß man nach der Druckfarbenflotation den wäßrigen Papierstoffsuspensionen ein oder mehrere organische Phosphorsäureester der allgemeinen Formel I

$$[R-O]_{y}-\overset{\displaystyle O \atop \parallel}{P}-[O(C_nH_{2n}O)_p-R^1]_{3-y}$$

in der die Reste R Wasserstoff, Alkalimetallkation, Ammoniumkation oder $(C_nH_{2n}O)_p$-$R^1$, und $R^1$ $C_{8-24}$-Alkyl, $C_{5-12}$-Cycloalkyl, $C_{8-24}$-Alkenyl oder Mono-, Di- oder Trialkylphenyl mit 1 - 12 C-Atomen in jedem Alkylrest bedeuten, n 2 oder 3 ist, p eine Zahl zwischen 0 und 100 und y 0 oder 1 oder 2 darstellt, in einer Gesamtmenge von 0,1 bis 8 g/kg lufttrockenem Papierstoff zusetzt.

Weiterer Erfindungsgegenstand ist die Verwendung von einem oder mehreren organischen Phosphorsäureestern der allgemeinen Formel I zur Entfernung von Füllstoffen aus Altpapieren durch Flotation.

Unter lufttrockenem Papierstoff versteht man, wenn sich im Papierstoff ein Gleichgewichtszustand an innerer Feuchte eingestellt hat. Diese ist von der Temperatur und der relativen Feuchte der Luft abhängig.

Unter dem Begriff "Füllstoffe" werden die in der Papierindustrie üblicherweise verwendeten Substanzen, beispielsweise Aluminiumsilikate wie Kaoline oder kieselsaure Tonerde und/oder Calciumcarbonate wie Kreide oder Kalk verstanden.

Als organische Phosphorsäureester der allgemeinen Formel I

$$[R-O]_{y}-\overset{\displaystyle O \atop \parallel}{P}-[O(C_nH_{2n}O)_p-R^1]_{3-y}$$

eignen sich insbesondere solche, in der die Reste R Wasserstoff, Alkalimetallkation, Ammoniumkation oder $(C_nH_{2n}O)$p-$R^1$ und $R^1$ $C_{8-24}$-Alkyl, Tributylphenyl, iso-Octylphenyl, iso-Nonylphenyl oder iso-Dodecylphenyl und die Indices n 2, p eine Zahl zwischen 4 und 60 und y 1 oder 2 bedeuten. Die Phosphorsäurealkyl-, -cycloalkyl-, -alkenyl und/oder -alkylphenylester werden in an sich bekannter Weise hergestellt, in dem vorzugsweise alkoxylierte Alkyl-, Cycloalkyl- und/oder Alkenylalkohole und/oder Alkylphenole mit Phosphorpentoxid oder Polyphosphorsäure umgesetzt werden (Winnacker/Küchler in "Chemische Technologie", 4. Auflage, Band 7, Seiten 123 bis 124, Carl Hanser Verlag (1986)). Bei diesem Verfahren werden überwiegend Gemische aus Mono- und Diestern gebildet. Zur Herstellung hochreiner Triester wird Phosphoroxychlorid benutzt. Die als Edukte zum Einsatz gelangenden gegebenenfalls alkoxylierten aliphatischen Alkohole und/oder Phenole werden durch oxalkylierung mit Ethylenoxid und/oder Propylenoxid nach bekannten großtechnischen Verfahren erhalten (Winnacker/Küchler in "Chemische Technologie", Band 7, Seite 131 bis 132, Carl Hanser Verlag München (1986)).

Nach der Druckfarbenflotation werden die wäßrigen Papierstoffsuspensionen erfindungsgemäß mit vorzugsweise 1 bis 4 g organischen Phosphorsäureestern der allgemeinen Formel I pro kg lufttrockenem Papierstoff bei 20 bis 60 °C versetzt. Der pH-Wert der Suspensionen liegt zwischen 7 und 11, vorzugsweise zwischen 8 und 10. Der Papierstoffgehalt liegt in den Suspensionen beispielsweise zwischen 0,5 und 2 Gew.-%. Anschließend wird in an sich bekannter Weise bei Temperaturen zwischen 20 und 95 °C, vorzugsweise zwischen 45 und 60 °C, in beispielsweise einer Denverflotationszelle flotiert.

Die nach dem erfindungsgemäßen Verfahren erhaltenen Faserstoffe zeichnen sich im Vergleich zu Faserstoffen, die in Gegenwart üblicher Tenside flotiert wurden, durch deutlich geringere Füllstoffgehalte aus. Mit dem erfindungsgemäßen Verfahren ist nunmehr die Möglichkeit gegeben, den Anteil an de-inktem Altpapier bei der Papierherstellung auf über 50 Gew.-% zu steigern.

## Beispiele

EO bedeutet Ethylenoxid

Die Flotationen wurden in einer Denver-Laborflotationszelle von etwa 9 l hhalt an wäßrigen Füllstoffsuspensionen sowie an wäßrigen Papierstoffsuspensionen durchgeführt.

Beispiel 1: Füllstoffsuspensionen

23 g Füllstoffe wurden in 9 l Wasser dispergiert und mit Natronlauge auf einen pH-Wert von 8,5 bis 9,0 eingestellt. Nach Zugabe von 0,2 g Aktivsubstanz Phosphorsäureester wurde sieben Minuten in einer Denver-Laborflotationszelle flotiert. Der in dem Überlauf der Flotationszelle enthaltene Feststoffanteil wurde abfiltriert, bei 105 °C bis zur Gewichtskonstanz getrocknet und gewogen. Die Ergebnisse sind in Tabelle 1 zusammengefaßt.

Tabelle 1:

| eingesetzte Phosphorsäureester | eingesetzte Füllstoffe | Füllstoff aus dem Überlauf in Gew.-% |
|---|---|---|
| Natriumsalz eines Mono/ | Kaolin | 60 |
| Diphosphatgemisches von | $CaCO_3$ | 98 |
| iso-Nonylphenol · 6,5 Mol $EO^{x)}$ | Kaolin/$CaCO_3^{xx)}$ | 75 |
| Natriumsalz eines Mono/ | Kaolin | 78 |
| Diphosphatgemiches von | $CaCO_3$ | 96 |
| iso-Nonylphenol · 10 Mol $EO^{x)}$ | Kaolin/$CaCO_3^{xx)}$ | 75 |
| zum Vergleich: | | |
| Natriumsalz von | Kaolin | 12 |
| iso-Nonylphenol · 10 Mol | $CaCO_3$ | 45 |
| EO-sulfat | Kaolin/$CaCO_3^{xx)}$ | 12 |

x) Molverhältnis Monoester : Diester etwa 2 : 1

xx) Gemisch aus 70 Gew.-% Kaolin und 30 Gew.-% $CaCO_3$

Beispiel 2: Papierstoffsuspensionen

Lufttrockener Papierstoff aus Zeitungen und Illustrierten (Gewichtsverhältnis 1 : 1) wurde mit den üblicherweise eingesetzten Chemikalien einer Druckfarbenflotation unterzogen. Nach der Druckfarbenflotation hatte

die Papierstoffsuspension eine Stoffdichte von 1 Gew.-%, eine Temperatur von 40 °C, einen pH-Wert von 9,0 und einen Aschegehalt von 16 Gew.-%. Zu 9 l der deinkten Papierstoffsuspension mit einer Stoffdichte von 1 Gew.-% wurden 0,2 g Aktivsubstanz Phosphorsäureester zugesetzt und 10 Minuten in einer Denver-Laborflotationszelle flotiert. Nach der Flotation wurde der Papierstoff über Papierfilter entwässert, bis zur Gewichtskonstanz bei 105 °C getrocknet und nach DIN 54 371 der Aschegehalt bestimmt. Die Ergebnisse sind in Tabelle 2 zusammengefaßt.

Tabelle 2:

| eingesetzte Phosphorsäureester | Füllstoffgehalt nach der Flotation im Papier in Gew.-% |
|---|---|
| Natriumsalz eines Mono/Diphosphatgemisches von iso-Nonylphenol · 6,5 Mol EO Molverhältnis Monoester : Diester etwa 2 : 1 | 6,5 |

**Patentansprüche**

1. Verfahren zur Entfernung von Füllstoffen aus Altpapieren durch Zugabe von Chemikalien und anschließende Flotation, dadurch gekennzeichnet, daß man nach der Druckfarbenflotation den wäßrigen Papierstoffsuspensionen ein oder mehrere organische Phosphorsäureester der allgemeinen Formel I

$$[R - O]_y - \overset{\overset{\displaystyle O}{\|}}{P} - [O(C_nH_{2n}O)_p - R^1]_{3-y}$$

in der die Reste R Wasserstoff, Alkalimetallkation, Ammoniumkation oder $(C_nH_{2n}O)_p$-$R^1$ und $R^1$ $C_{8-24}$-Alkyl, $C_{5-12}$-Cycloalkyl, $C_{8-24}$-Alkenyl oder Mono-, Di- oder Trialkylphenyl mit 1 - 12 C-Atomen in jedem Alkylrest und die Indices n 2 oder 3, p eine Zahl zwischen 0 und 100 und y 0 oder 1 oder 2 bedeuten, in einer Gesamtmenge von 0,1 bis 8 g/kg lufttrockenem Papierstoff zusetzt.

2. Verfahren nach Anspruch 1 dadurch gekennzeichnet, daß man den Papierstoffsuspensionen organische Phosphorsäureester der allgemeinen Formel I in einer Gesamtmenge von 1 bis 4 g/kg lufttrockenem Papierstoff zusetzt.

3. Verfahren nach einem oder beiden der Ansprüch 1 bis 2 dadurch gekennzeichnet, daß den Suspensionen organische Phosphorsäureester der allgemeinen Formel I, in der die Reste R Wasserstoff, Alkalimetallkation, Ammoniumkation oder $(C_nH_{2n}O)_p$-$R^1$ und $R^1$ $C_{8-24}$-Alkyl, Tributylphenyl, iso-Octylphenyl, iso-Nonylphenyl oder iso-Dodecylphenyl und die Indices n 2, p eine Zahl zwischen 4 und 60 und y 1 oder 2 bedeuten, zusetzt.

4. Verwendung von einem oder mehreren organischen Phosphorsäureestern der allgemeinen Formel I

$$[R-O]_y-\overset{\overset{\displaystyle O}{\|}}{P}-[O(C_nH_{2n}O)_p-R^1]_{3-y}$$

in der R Wasserstoff, Alkalimetallkation, Ammoniumkation oder $(C_nH_{2n}O)_p$-$R^1$, $R^1$ $C_{8-24}$-Alkyl, $C_{5-12}$-Cycloalkyl, $C_{8-24}$-Alkenyl oder Mono-, Di- oder Trialkylphenyl mit 1 - 12 C-Atomen in jedem Alkylrest, n 2 oder 3, p eine Zahl zwischen 0 und 100 und y 0 oder 1 oder 2 bedeuten, zur Entfernung von Füllstoffen aus Altpapieren durch Flotation.

5. Verwendung nach Anspruch 4, dadurch gekennzeichnet, daß die organischen Phosphorsäureester der allgemeinen Formel I in den wäßrigen Papierstoffsuspensionen in einer Gesamtmenge von 0,1 bis 8 g/kg lufttrockenem Papierstoff, vorzugsweise von 1 bis 4 g/kg lufttrockenem Papierstoff verwendet werden.

6. Verwendung nach einem oder beiden der Ansprüche 4 bis 5, dadurch gekennzeichnet, daß den Suspensionen organische Phosphorsäureester der allgemeinen Formel I, in der die Reste R Wasserstoff, Alkalimetallkation, Ammoniumkation oder $(C_nH_{2n}O)_p$-$R^1$ und $R^1$ $C_{8-24}$-Alkyl, Tributylphenyl, iso-Octylphenyl, iso-Nonylphenyl oder iso-Dodecylphenyl und die Indices n 2, p eine Zahl zwischen 4 und 60 und y 1 oder 2 bedeuten, verwendet werden.

## Claims

1. A process for the removal of fillers from wastepaper by addition of chemicals and subsequent flotation, characterized in that, after flotation of the printing ink, one or more phosphoric acid esters corresponding to general formula I

$$[R-O]_y-\overset{\overset{\displaystyle O}{\|}}{P}-[O(C_nH_{2n}O)_p-R^1]_{3-y}$$

in which the R's represent hydrogen, an alkali metal cation, an ammonium cation or $(C_nH_{2n}O)_p$-$R^1$ and $R^1$ represents $C_{8-24}$ alkyl, $C_{5-12}$ cycloalkyl, $C_{8-24}$ alkenyl or mono-, di- or trialkylphenyl containing 1 to 12 C atoms in each alkyl radical, n is 2 or 3, p is a number of 0 to 100 and y is 0 or 1 or 2,
is/are added to the aqueous paper stock suspensions in a total quantity of from 0.1 to 8 g/kg air-dry paper stock.

2. A process as claimed in claim 1, characterized in that organic phosphoric acid esters corresponding to general formula I are added to the paper stock suspensions in a total quantity of 1 to 4 g/kg air-dry paper stock.

3. A process as claimed in one or both of claims 1 to 2, characterized in that organic phosphoric acid esters corresponding to general formula I, in which the R's represent hydrogen, an alkali metal cation, an ammonium cation or $(C_nH_{2n}O)_p$-$R^1$ and $R^1$ represents $C_{8-24}$ alkyl, tributylphenyl, iso-octylphenyl, iso-nonylphenyl or iso-dodecylphenyl and n is 2, p is a number of 4 to 60 and y is 1 or 2,
are added to the suspensions.

4. The use of one or more phosphoric acid esters corresponding to general formula I

$$[R - O]_y - \overset{\overset{O}{\|}}{P} - [O(C_nH_{2n}O)_p - R^1]_{3-y}$$

in which the R's represent hydrogen, an alkali metal cation, an ammonium cation or $(C_nH_{2n}O)_p$-$R^1$ and $R^{14}$ represents $C_{8-24}$ alkyl, $C_{5-12}$ cycloalkyl, $C_{8-24}$ alkenyl or mono-, di- or trialkylphenyl containing 1 to 12 C atoms in each alkyl radical, n is 2 or 3, p is a number of 0 to 100 and y is 0 or 1 or 2, for the removal of fillers from wastepaper by flotation.

5. The use claimed in claim 4, characterized in that the organic phosphoric acid esters corresponding to general formula I are used in the aqueous paper stock suspensions in a total quantity of 0.1 to 8 g/kg air-dry paper stock and preferably in a total quantity of 1 to 4 g/kg air-dry paper stock.

6. The use claimed in one or both of claims 4 to 5, characterized in that organic phosphoric acid esters of general formula I, in which the R's represent hydrogen, an alkali metal cation, an ammonium cation or $(C_nH_{2n}O)_p$-$R^1$ and $R^1$ represents $C_{8-24}$ alkyl, tributylphenyl, iso-octylphenyl, iso-nonylphenyl or iso-dodecylphenyl and n is 2, p is a number of 4 to 60 and y is 1 or 2, are used.

## Revendications

1. Procédé d'élimination des charges de vieux papiers par addition de produits chimiques et flottation consécutive, caractérisé en ce qu'après la flottation des encres, on ajoute aux suspensions aqueuses de pâte à papier un ou plusieurs esters phosphoriques organiques de formule générale I

$$[R - O]_y - \overset{\overset{O}{\|}}{P} - [O(C_nH_{2n}O)_p - R^1]_{3-y}$$

dans laquelle les radicaux R représentent l'hydrogène, un cation de métal alcalin, un cation ammonium ou $(C_nH_{2n}O)_p$-$R^1$, et $R^1$ représente un alkyle $C_{8-24}$, cycloalcyle $C_{5-12}$, alcényle $C_{8-24}$ ou mono,-di ou trialkylphényle avec 1-12 atomes de C dans chaque radical alkyle, n est 2 ou 3, p est un nombre compris entre 0 et 100 et y est 0 ou 1 ou 2, à une concentration totale de 0,1 à 8 g/kg de pâte sèche à l'air.

2. Procédé selon la revendication 1, caractérisé en ce qu'on ajoute aux suspensions de pâte à papier des esters phosphoriques organiques de formule générale I à une concentration de 1 à 4 g/kg de pâte à papier sèche à l'air.

3. Procédé selon une des revendications 1 à 2, ou les deux, caractérisé en ce qu'on ajoute aux suspensions des esters phosphoriques organiques de formule générale I, dans laquelle les radicaux R représentent l'hydrogène un cation de métal alcalin, un cation ammonium ou $(C_nH_{2n}O)_p$-$R^1$ et $R^1$ et représente un alkyle $C_{8-24}$, le tributylphényle, l'iso-octylphényle, l'iso-nonylphényle ou l'iso-dodécylphényle et l'indice n représente 2, p est un nombre compris entre 4 et 60 et y 1 ou 2.

4. Utilisation d'un ou plusieurs esters phosphoriques organiques de formule générale I

$$[R - O]_y - \overset{\overset{O}{\|}}{P} - [O(C_nH_{2n}O)_p - R^1]_{3-y}$$

dans laquelle les radicaux R représentent l'hydrogène, un cation de métal alcalin, un cation ammonium ou $(C_nH_{2n}O)_p$-$R^1$, et $R^1$ représente un alkyle $C_{8-24}$, cycloalkyle $C_{5-12}$, alcényle $C_{8-24}$ ou mono,-di ou trialkylphényle avec 1-12 atomes de C dans chaque radical alkyle, n est 2 ou 3, p est un nombre compris entre 0 et 100 et y est 0 ou 1 ou 2, pour éliminer les charges de vieux papiers par flottation.

**5.** Utilisation selon la revendication 4, caractérisée en de qu'on utilise les esters phosphoriques organiques de formule générale I dans les suspensions aqueuses de pâte à papier à une concentration de 0,1 à 8 g/kg de pâte de papier sèche à l'air, de préférence 1 à 4 g/kg de pâte de papier sèche à l'air.

**6.** Utilisation selon une des revendications 4 à 5, ou les deux, caractérisée en ce qu'on ajoute aux suspensions des esters phosphoriques organiques de formule générale I, dans laquelle les radicaux R représentent l'hydrogène, un cation de métal alcalin, un cation ammonium ou $(C_nH_{2n}O)_p$-$R^1$, et $R^1$ représente un allyle $C_{8-24}$, tributylphényle, iso-octylphényle, iso-nonylphényle ou iso-dodécylphényle et l'indice n=2, p est un nombre compris entre 4 et 60 et y est 1 ou 2.